# EUROPEAN PATENT APPLICATION

(11) **EP 4 596 732 A1**
(43) Date of publication of application: **06.08.2025**
(21) Application number: 23872241.7
(22) Date of filing: 25.09.2023
(51) Int. Cl.: C22C 9/00, C22C 12/00, C22C 30/02, C22C 30/04, C04B 37/02, B23K 35/28, B23K 35/30

(54) **BRAZING MATERIAL FOR JOINING AND JOINT**

(30) Priority: 26.09.2022 JP 2022152886
(71) Applicant: NHK Spring Co., Ltd., Yokohama-shi, Kanagawa 236-0004 (JP)
(72) Inventor: YAMAUCHI, Yuichiro, Yokohama-shi, Kanagawa 236-0004 (JP); SEKI, Yusuke, Yokohama-shi, Kanagawa 236-0004 (JP)
(74) Representative: Hoffmann Eitle
(86) International application number: PCT/JP2023/034671
(87) International publication number: WO 2024/071018

(57) **Abstract**

A brazing material for joining according to the present invention is a brazing material for joining a ceramic and a metal, the brazing material including 31 wt% or more and less than 60 wt% of antimony (Sb), 1 wt% or more and 5 wt% or less of titanium (Ti), and a balance of copper (Cu) and unavoidable impurities.

## Description

### Field

The present invention relates to a brazing material for joining and a joined body.

### Background

Conventionally, as a circuit board used in a semiconductor device or the like, a joined body in which a ceramic having heat resistance and insulating properties and a conductive metal are joined is known (see, for example, Patent Literatures 1 and 2). In Patent Literatures 1 and 2, a brazing material is used for joining the ceramic and the metal. In this case, as the brazing material, a Cu-Mg-Ti alloy obtained by adding titanium (Ti) or a Ti-Cu alloy to a copper-magnesium (Cu-Mg) alloy, or a brazing material containing Cu and a eutectic element that undergoes a eutectic reaction with the Cu is used. Here, Patent Literature 2 describes that when antimony (Sb) is used as the eutectic element, the mass% of Sb in the brazing material is set to 56% or more and 90% or less.

### Citation List

### Patent Literature

Patent Literature 1: JP 4375730 B
Patent Literature 2: JP 6256176 B

### Summary

### Technical Problem

Meanwhile, Mg has a high vapor pressure, and according to Cited Literature 1, when evaporation of Mg has occurred in a joining process exceeding 500°C, a joining failure may occur. In addition, Sb is known as a brittle material, and according to Patent Literature 2, the amount of Sb added to Cu is large, and brittle fracture is likely to occur at a joining interface.

The present invention has been made in view of the above, and an object of the present invention is to provide a brazing material for joining capable of joining a ceramic and a metal with high strength and a joined body. Solution to Problem

To solve the above-described problem and achieve the object, a brazing material according to the present invention for joining a ceramic and a metal includes: 31 wt% or more and less than 60 wt% of antimony (Sb); 1 wt% or more and 5 wt% or less of titanium (Ti); and a balance of copper (Cu) and unavoidable impurities.

Moreover, the above-described brazing material for joining according to the present invention includes at least one selected from tin (Sn) and indium (In) in a total amount of 1 wt% or more and less than 30 wt%.

Moreover, a joined body according to the present invention includes: a ceramic; a metal; and a brazing material for joining the ceramic and the metal, the brazing material including 31 wt% or more and less than 60 wt% of antimony (Sb), 1 wt% or more and 5 wt% or less of titanium (Ti), and a balance of copper (Cu) and unavoidable impurities.

### Advantageous Effects of Invention

The present invention exhibits an effect that a ceramic and a metal can be joined with high strength. Brief Description of Drawings

[FIG. 1] FIG. 1 is a diagram illustrating a configuration of a joined body according to an embodiment of the present invention.
[FIG. 2] FIG. 2 is an ultrasonic flaw detection image at a joining interface of a joined body obtained in Examples.
[FIG. 3] FIG. 3 is an image obtained by performing binarization processing on the ultrasonic flaw detection image of FIG. 2.
[FIG. 4] FIG. 4 is a diagram for describing a test piece used in a tensile test.
[FIG. 5] FIG. 5 is a diagram illustrating the joining rates in Examples 1 to 7.
[FIG. 6] FIG. 6 is a diagram illustrating the joining rates in Comparative Examples 1 to 6.
[FIG. 7] FIG. 7 is a diagram illustrating the tensile shear loads in Examples 1 and 4 to 7.

### Description of Embodiments

Hereinafter, modes for carrying out the present invention (hereinafter, referred to as "embodiment") will be described with reference to the accompanying drawings. The drawings are schematic, and the relationship between the thickness and the width of each portion, the ratio of the thickness of each portion, and the like may be different from actual ones, and portions having different dimensional relationships and ratios between the drawings may be included.

### (Embodiment)

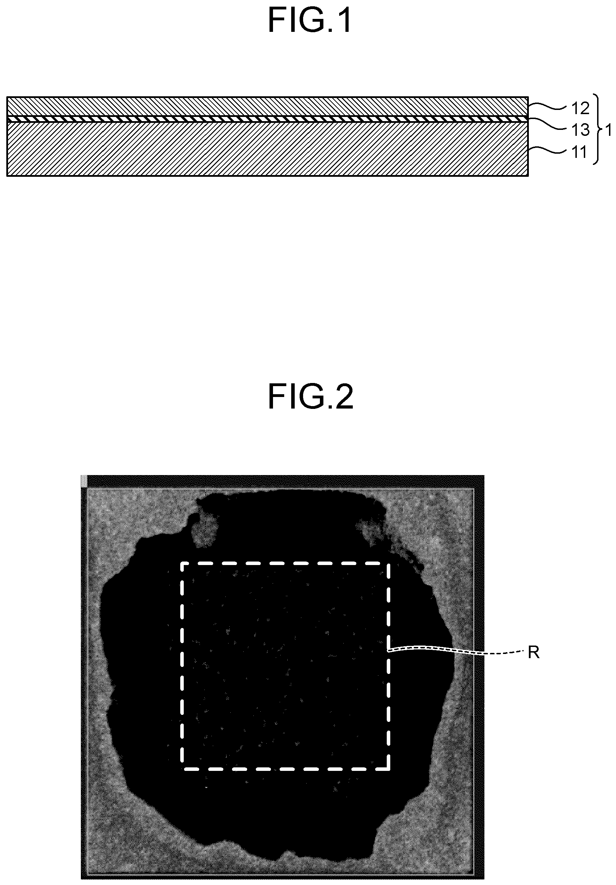

FIG. 1 is a diagram illustrating a configuration of a joined body according to an embodiment of the present invention. A joined body 1 is used, for example, as a circuit board in a semiconductor device or the like. The joined body 1 includes a ceramic layer 11 formed using a ceramic, a conductive layer 12 formed using a conductive material, and a joining layer 13 provided between the ceramic layer 11 and the conductive layer 12 and joining the ceramic layer and the conductive layer.

The ceramic layer 11 has, for example, a plate shape. The ceramic layer 11 is formed using, for example, Si₃N₄.

The conductive layer 12 is formed using a conductive metal such as copper (Cu).

The joining layer 13 is formed of a brazing material component containing antimony (Sb) as a first additive in an amount of 31 wt% or more and less than 60 wt%, titanium (Ti) as a second additive in an amount of 1 wt% or more and 5 wt% or less, and a balance of Cu and unavoidable impurities. The joining layer 13 may contain at least one selected from tin (Sn) and indium (In) as a third additive in a total amount of 1 wt% or more and less than 30 wt%.

Specifically, the joining layer 13 includes an active metal layer and an alloy layer. In the joining layer 13, the active metal layer and the alloy layer are provided from the ceramic layer 11 side.

The active metal layer contains titanium (Ti) as the second additive.

The alloy layer contains at least Cu and Sb as the first additive. The alloy layer may contain the third additive in addition to the first additive.

In the embodiment of the present invention described above, the joining layer 13 joining the ceramic layer 11 and the conductive layer 12 is formed of a brazing material component containing antimony (Sb) as the first additive in an amount of 31 wt% or more and less than 60 wt%, titanium (Ti) as the second additive in an amount of 1 wt% or more and 5 wt% or less, and the balance of Cu and unavoidable impurities. Here, since the joining layer 13 contains Ti and Sb within the above ranges, Ti improves the reactivity with the ceramic, and Sb is eutectic with Cu. This can join the ceramic and the metal with high strength.

In the embodiment of the present invention, since the joining layer 13 contains tin (Sn) and/or indium (In), the mechanical properties of the joined body can be improved.

### [Examples]

Hereinafter, Examples of the joined body according to the present invention will be described. The present invention is not limited to these Examples.

### (Example 1)

A joined body in which a ceramic and a metal were joined using a brazing material having a composition shown in Table 1 was produced. The brazing material includes 31 wt% of Sb, 2 wt% of Ti, and the balance of Cu and unavoidable impurities.

Si₃N₄ having a length of 25 mm, a width of 25 mm, and a thickness of 0.32 mm as a ceramic layer and a copper alloy of C1020 having a length of 25 mm, a width of 25 mm, and a thickness of 0.5 mm as a conductive layer were joined with the brazing material having the composition of Example 1. Specifically, a paste-like brazing material was applied to a central region (15 mm × 15 mm) of the copper alloy, and the joined body was produced in a vacuum heat treatment furnace in a vacuum atmosphere with a load of 2.5 kgf and a surface pressure of 0.04 MPa. As temperature conditions, the temperature was raised at 10°C/min, kept at 600°C (first soaking temperature) for 30 minutes and at 720°C (second soaking temperature) for 1 hour, then cooled at 3°C/min to 100°C, and thereafter cooled by sealing with nitrogen.

### <Evaluation of Whether Joined or Not Joined>

Whether the ceramic and the metal were joined in the joined body was evaluated as follows by visually observing whether they were joined by brazing.
∘: Joined.
△: Joined but there is damage such as cracks in the joining layer.
×: Not joined.

### <Evaluation of Joining Rate>

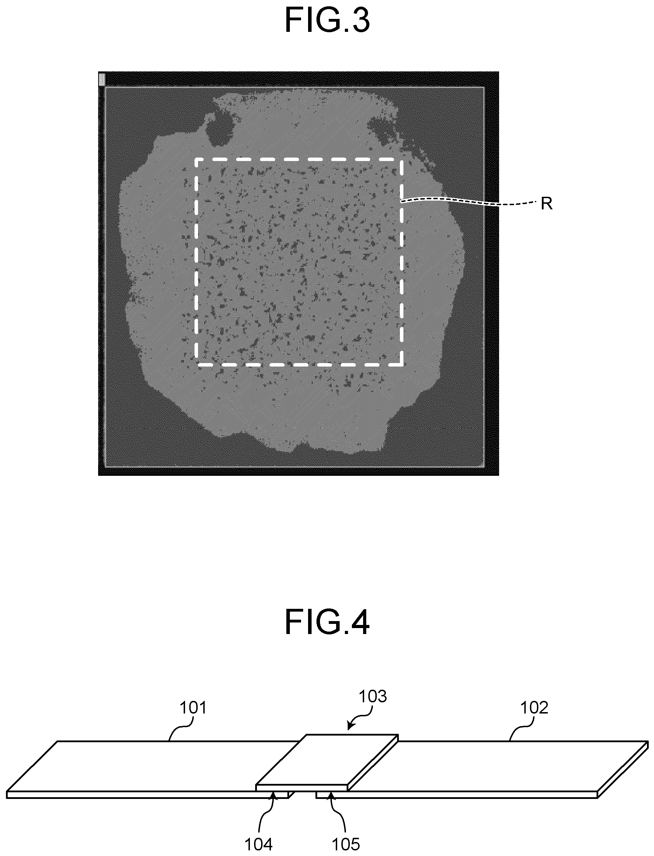

For the joined bodies with the evaluation of whether joined or not joined of ∘ and △, the joining state of the joining interface was imaged by an ultrasonic flaw detection (SAT), and the captured image was subjected to binarization processing to calculate the joining rate. At this time, the application range (15 × 15 mm: region R in FIGS. 2 and 3) of the brazing material was set to 100%, and the rate of the area of the region where the brazing material was applied and spread was taken as the joining rate.

FIG. 2 is an ultrasonic flaw detection image at the joining interface of the joined body obtained in Examples. FIG. 3 is an image obtained by performing binarization processing on the ultrasonic flaw detection image of FIG. 2. After acquiring the SAT image as in FIG. 2, binarization processing is performed on the SAT image to obtain the binarized image of FIG. 3. In FIG. 3, light-colored regions indicate joined regions (joining OK), and dark-colored regions indicate unjoined regions (joining NG). For the joining rate, the area of the light-colored regions was determined, and the rate with respect to 225 mm² was taken as the joining rate.

### <Tensile Test>

First, a test piece for a tensile test was produced. FIG. 4 is a diagram for describing the test piece used in the tensile test. As the test piece, a ceramic plate 103 made of Si₃N₄ having a length of 25 mm, a width of 25 mm, and a thickness of 0.32 mm is joined to two copper plates (copper plates 101 and 102) made of C1020 having a length of 25 mm, a width of 80 mm, and a thickness of 0.5 mm with a brazing material interposed therebetween. Here, brazing materials 104 and 105 are applied to two regions each having a length of 25 mm and a width of 10 mm in the ceramic plate, and the copper plates 101 and 102 are bonded to the respective regions. Thereafter, a weight made of tungsten is placed such that the surface pressure is 0.04 MPa, and the bonding surface is fixed.

The copper plates 101 and 102 of the produced test pieces were gripped and moved in directions in which the copper plates 101 and 102 were separated from each other, the test pieces were pulled, and the withstand load until breaking was measured as a tensile shear load.

The composition and test results of the brazing material in Example 1 are shown in Table 1.

### [TABLE 1]

**(Table 1)**

| | Composition | | | | | | | | Joining condition | Joined or not joined | Joining rate | Withstand load in tensile shear test | Tensile shear withstand load ratio |
|---|---|---|---|---|---|---|---|---|---|---|---|---|---|
| | Cu | Sb | Ni | Mg | Sn | In | P | Ti | | | | | |
| Example 1 | Bal. | 31 | - | - | - | - | - | 2 | 720°C × 1 hr.in Vac. | ○ | 211% | 803N | 1.00 |
| Example 2 | Bal. | 40 | - | - | - | - | - | 2 | 720°C × 1 hr.in Vac. | ○ | 272% | 1312N | 1.63 |
| Example 3 | Bal. | 50 | - | - | - | - | - | 2 | 720°C × 1 hr.in Vac. | ○ | 273% | 812N | 1.01 |
| Example 4 | Bal. | 31 | - | - | 5 | - | - | 2 | 720°C × 1 hr.in Vac. | ○ | 246% | 785N | 0.98 |
| Example 5 | Bal. | 31 | - | - | 20 | - | - | 2 | 720°C × 1 hr.in Vac. | ○ | 222% | 613N | 0.76 |
| Example 6 | Bal. | 31 | - | - | - | 5 | - | 2 | 720°C × 1 hr.in Vac. | ○ | 211% | 738N | 0.92 |
| Example 7 | Bal. | 31 | - | - | - | 20 | - | 2 | 720°C × 1 hr.in Vac. | ○ | 182% | 1107N | 1.38 |
| Comparative Example 1 | Bal. | 20 | - | - | - | - | - | 2 | 950°C × 1 hr.in Vac. | × | - | Not performed | - |
| Comparative Example 2 | Bal. | 60 | - | - | - | - | - | 2 | 720°C × 1 hr.in Vac. | △ | 261% | Not performed | - |
| Comparative Example 3 | Bal. | 90 | - | - | - | - | - | 2 | 720°C × 1 hr.in Vac. | △ | 228% | Not performed | - |
| Comparative Example 4 | Bal. | 31 | - | 1 | - | - | - | 2 | 720°C × 1 hr.in N₂ | ○ | 100% | Not performed | - |
| Comparative Example 5 | Bal. | 31 | - | 3 | - | - | - | 2 | 720°C × 1 hr.in N₂ | ○ | 100% | Not performed | - |
| Comparative Example 6 | Bal. | 31 | - | 5 | - | - | - | 2 | 720°C × 1 hr.in N₂ | ○ | 100% | Not performed | - |
| Comparative Example 7 | Bal. | 31 | - | 10 | - | - | - | 2 | 720°C × 1 hr.in N₂ | × | - | Not performed | - |
| Comparative Example 8 | Bal. | - | - | 20 | - | - | - | 5 | 830°C × 1 hr.in N₂ | × | - | Not performed | - |
| Comparative Example 9 | Bal. | - | - | 30 | - | - | - | 5 | 700°C × 1 hr.in N₂ | × | - | Not performed | - |
| Comparative Example 10 | Bal. | - | - | 40 | - | - | - | 5 | 620°C × 1 hr.in N₂ | × | - | Not performed | - |
| Comparative Example 11 | Bal. | - | 4 | - | 15 | - | 5 | 2 | 670°C × 1 hr.in Vac. | × | - | Not performed | - |

### (Example 2)

Example 2 was the same as Example 1 except that the Sb content proportion in the composition of the brazing material was set to 40 wt%. The composition and test results of the brazing material in Example 2 are shown in Table 1.

### (Example 3)

Example 3 was the same as Example 1 except that the Sb content proportion in the composition of the brazing material was set to 50 wt%. The composition and test results of the brazing material in Example 3 are shown in Table 1.

### (Example 4)

Example 4 was the same as Example 1 except that 5 wt% of Sn was further added in the composition of the brazing material. The composition and test results of the brazing material in Example 4 are shown in Table 1.

### (Example 5)

Example 5 was the same as Example 1 except that 20 wt% of Sn was further added in the composition of the brazing material, and the time with the second soaking temperature was set to three hours. The composition and test results of the brazing material in Example 5 are shown in Table 1.

### (Example 6)

Example 6 was the same as Example 1 except that 5 wt% of In was further added in the composition of the brazing material. The composition and test results of the brazing material in Example 6 are shown in Table 1.

### (Example 7)

Example 7 was the same as Example 1 except that 20 wt% of In was further added in the composition of the brazing material, and the heating time with the second soaking temperature was set to four hours. The composition and test results of the brazing material in Example 7 are shown in Table 1.

### (Comparative Example 1)

Comparative Example 1 was the same as Example 1 except that the Sb content proportion in the composition of the brazing material was set to 20 wt%, and the second soaking temperature was set to 950°C. The composition and test results of the brazing material in Comparative Example 1 are shown in Table 1.

### (Comparative Example 2)

Comparative Example 2 was the same as Example 1 except that the Sb content proportion in the composition of the brazing material was set to 60 wt%. The composition and test results of the brazing material in Comparative Example 2 are shown in Table 1.

### (Comparative Example 3)

Comparative Example 3 was the same as Example 1 except that the Sb content proportion in the composition of the brazing material was set to 90 wt%. The composition and test results of the brazing material in Comparative Example 3 are shown in Table 1.

### (Comparative Example 4)

Comparative Example 4 was the same as Example 1 except that 1 wt% of Mg was further added in the composition of the brazing material, and the heating environment with the second soaking temperature was set to a nitrogen atmosphere. The composition and test results of the brazing material in Comparative Example 4 are shown in Table 1.

### (Comparative Example 5)

Comparative Example 5 was the same as Example 1 except that 3 wt% of Mg was further added in the composition of the brazing material, and the heating environment with the second soaking temperature was set to a nitrogen atmosphere. The composition and test results of the brazing material in Comparative Example 5 are shown in Table 1.

### (Comparative Example 6)

Comparative Example 6 was the same as Example 1 except that 5 wt% of Mg was further added in the composition of the brazing material, and the heating environment with the second soaking temperature was set to a nitrogen atmosphere. The composition and test results of the brazing material in Comparative Example 6 are shown in Table 1.

### (Comparative Example 7)

Comparative Example 7 was the same as Example 1 except that 10 wt% of Mg was further added in the composition of the brazing material, and the heating environment with the second soaking temperature was set to a nitrogen atmosphere. The composition and test results of the brazing material in Comparative Example 7 are shown in Table 1.

### (Comparative Example 8)

Comparative Example 8 was the same as Example 1 except that 20 wt% of Mg was contained instead of Sb, and Ti was changed to 5 wt% in the composition of the brazing material, the second soaking temperature was set to 830°C, and the heating environment with the second soaking temperature was set to a nitrogen atmosphere. The composition and test results of the brazing material in Comparative Example 8 are shown in Table 1.

### (Comparative Example 9)

Comparative Example 9 was the same as Example 1 except that 30 wt% of Mg was contained instead of Sb, and Ti was changed to 5 wt% in the composition of the brazing material, the second soaking temperature was set to 700°C, and the heating environment with the second soaking temperature was set to a nitrogen atmosphere. The composition and test results of the brazing material in Comparative Example 9 are shown in Table 1.

### (Comparative Example 10)

Comparative Example 10 was the same as Example 1 except that 40 wt% of Mg was contained instead of Sb, and Ti was changed to 5 wt% in the composition of the brazing material, the second soaking temperature was set to 620°C, and the heating environment with the second soaking temperature was set to a nitrogen atmosphere. The composition and test results of the brazing material in Comparative Example 10 are shown in Table 1.

### (Comparative Example 11)

Comparative Example 11 was the same as Example 1 except that 4 wt% of Ni, 15 wt% of Sn, and 5 wt% of phosphorus (P) were used in place of Sb in the composition of the brazing material, and the second soaking temperature was set to 670°C. The composition and test results of the brazing material in Comparative Example 11 are shown in Table 1.

In Examples 1 to 7, it was confirmed that the ceramic and the metal (Cu) were all joined by the brazing material. On the other hand, in Comparative Examples 1 and 7 to 11, it was confirmed that the ceramic and the metal were not joined by the brazing material of each composition. In Comparative Examples 2 and 3, the ceramic and the metal were joined, but cracks were generated in the brazing material.

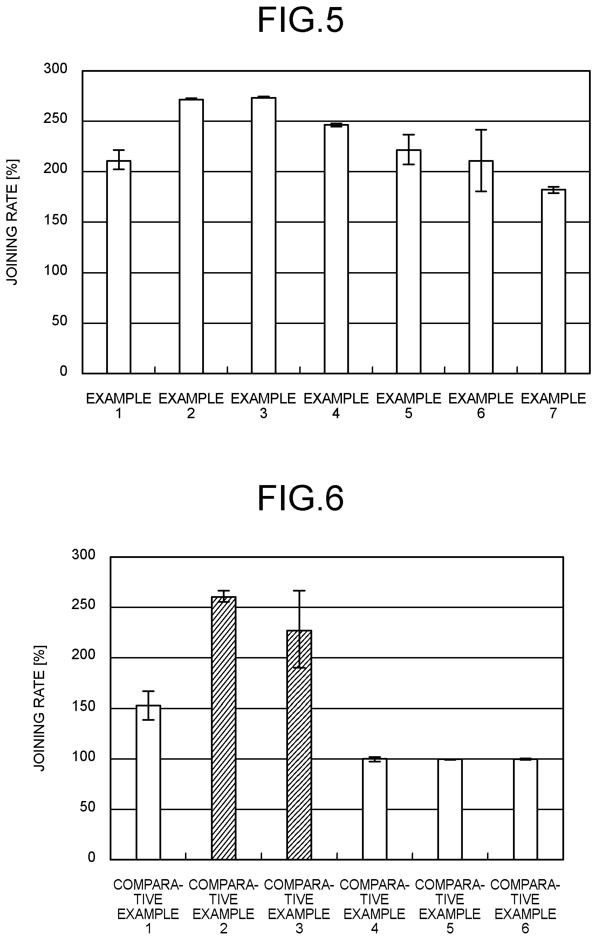

FIG. 5 is a diagram illustrating the joining rates in Examples 1 to 7. FIG. 6 is a diagram illustrating the joining rates in Comparative Examples 1 to 6. In Examples 1 to 7, the ceramic and the metal were joined by the brazing material spreading to 182% or more. On the other hand, in Comparative Examples 4 to 6, the joining rate was 100%, and it was shown that the brazing material was not spread. In Comparative Examples 2 and 3, the joining rate was high, but cracks were generated in the brazing material.

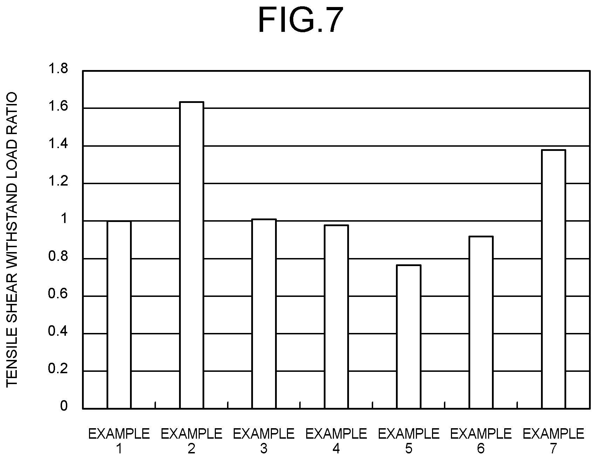

FIG. 7 is a diagram illustrating tensile shear load ratios in Examples 1 and 4 to 7. The tensile shear load ratio in FIG. 7 indicates the ratio of the tensile shear load of Examples 2 to 7 to the tensile shear load of Example 1. As shown in Table 1 and FIG. 7, in Examples 1 and 4 to 7, a tensile shear load of 613 N or more was obtained, and each showed a high joining rate.

Although an embodiment for carrying out the present invention have been described so far, the present invention should not be limited only by the above-described embodiment.

As described here, the present invention can include various embodiments and the like not described herein, and various design changes and the like can be made without departing from the technical idea specified by the claims.

### Industrial Applicability

As described above, the brazing material for the joined body and the joined body according to the present invention are suitable for joining a ceramic and a metal with high strength.

### Reference Signs List

1 JOINED BODY
11 CERAMIC LAYER
12 CONDUCTIVE LAYER
13 JOINING LAYER

## Claims

1. A brazing material for joining a ceramic and a metal, the brazing material comprising:
31 wt% or more and less than 60 wt% of antimony (Sb);
1 wt% or more and 5 wt% or less of titanium (Ti); and
a balance of copper (Cu) and unavoidable impurities.

2. The brazing material for joining according to claim 1, comprising at least one selected from tin (Sn) and indium (In) in a total amount of 1 wt% or more and less than 30 wt%.

3. A joined body comprising:
a ceramic;
a metal; and
a brazing material for joining the ceramic and the metal, the brazing material including
31 wt% or more and less than 60 wt% of antimony (Sb),
1 wt% or more and 5 wt% or less of titanium (Ti), and
a balance of copper (Cu) and unavoidable impurities.
